(19) Europäisches Patentamt
European Patent Office
Office européen des brevets

(11) EP 1 694 551 B1

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(21) Anmeldenummer: **04804612.2**

(22) Anmeldetag: **30.11.2004**

(51) Int Cl.:
***B62D 15/02** (2006.01)*

(86) Internationale Anmeldenummer:
**PCT/EP2004/053174**

(87) Internationale Veröffentlichungsnummer:
**WO 2005/059861 (30.06.2005 Gazette 2005/26)**

(54) **EINPARKHILFE**

PARKING AID

AIDE AU STATIONNEMENT

(84) Benannte Vertragsstaaten:
**DE FR**

(30) Priorität: **09.12.2003 DE 10357708**
**05.03.2004 DE 102004011409**
**18.11.2004 DE 102004055584**

(43) Veröffentlichungstag der Anmeldung:
**30.08.2006 Patentblatt 2006/35**

(73) Patentinhaber: **Continental Teves AG & Co. oHG**
**60488 Frankfurt am Main (DE)**

(72) Erfinder:
- **LÜKE, Stefan**
**57462 Olpe (DE)**
- **SCHWARZ, Ralf**
**69118 Heidelberg (DE)**
- **BAYER, Ronald**
**63165 Mühlheim/Main (DE)**
- **FRÖHLICH, Dirk**
**68642 Bürstadt (DE)**

(56) Entgegenhaltungen:
**DE-A1- 10 017 279**
**DE-A1- 10 136 410**
**DE-C1- 19 645 646**
**US-A- 4 735 274**
**US-A- 4 931 930**
**US-A- 5 742 141**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 694 551 B1

## Beschreibung

Die Erfindung betrifft eine Einparkhilfe für ein Fahrzeug mit einer Fahrzeuglenkung mit einem Lenkhandrad (Lenkrad) und einem Lenkmomenten-Regelungsmodul, mittels welchem dem Lenkrad ein Lenkmoment aufprägbar ist, wobei die Einparkhilfe mit dem Lenkmomenten-Regelungsmodul zusammenwirkt und ein zusätzliches Lenkmoment auf das Lenkrad aufgebracht wird, mittels dem der Fahrer des Fahrzeugs bei einem Einparkvorgang unterstützt wird und zusätzlich auf das Lenkrad aufgebrachte Lenkmoment mindestens einen künstlichen Lenkanschlag generiert und der Fahrer durch das zusätzlich auf das Lenkrad aufgebrachte Lenkmoment bei seiner Lenktätigkeit bei dem Einparkvorgang geführt wird.

Heutige Einparkhilfen weisen den Fahrer mit optischen oder akustischen Mitteln auf die Größe des verbleibenden Parkraumes hin oder geben visuelle und/ oder Audio-Handlungsanweisungen zum Einfahren in die Parklücke. Die dafür erforderlichen Anzeigemittel müssen oft zusätzlich eingebaut werden und bieten nur einen begrenzten Komfortgewinn.

Aus der US 5,742,141 ist eine Einparkhilfe der eingangs genannten Gattung bekannt, bei der die Position des Kraftfahrzeugs als auch die notwendige Trajektorie berechnet wird. Die Einparkhilfe ändert die Kraft der Lenkunterstützung und gibt dem Fahrzeugführer eine taktile Rückmeldung.

Die US 4,735,274 offenbart eine Einparkhilfe, bei der ein Mikroprozessor ein hydraulisches Ventil steuert, das mit dem Zylinder einer hydraulischen Lenkunterstützung verbunden ist. Die Steuerung des hydraulischen Ventils erfolgt dabei in Abhängigkeit von Sensorsignalen, die dem Mikroprozessor zugeführt werden und Informationen des longitudinalen und transversalen Abstands zu stehenden Fahrzeugen beinhaltet.

Aus der DE 196 45 646 C1 ist eine Vorrichtung zur Steuerung des Lenkwinkels eines Fahrzeugs bekannt. Bei der vorbekannten Vorrichtung erfolgt die Lenkwinkeleinstellung in Abhängigkeit von der Bedienelement-Betätigungsgröße mit einer fahrzeuggeschwindigkeitsabhängigen Lenkübersetzung.

Ein System zur automatischen Staufolgeführung ist aus der DE 100 17 279 A1 bekannt. Dieses Verfahren dient dem Zweck, den Fahrer in Stausituationen sowohl durch die Übernahme der Querführung mittels einer automatischen Lenkungsregelung als auch durch Einhalten einer bestimmten Distanz zum Führungsfahrzeug zu entlasten.

Aus der US 4,931,930 ist eine Vorrichtung zum automatischen Parken eine Kraftfahrzeugs bekannt. Die Vorrichtung erzeugt verschiedene Signale, um den Fahrer anzuleiten, das Fahrzeug vorwärts zu bewegen, zu stoppen, nach links oder rechts zu bewegen oder rückwärts zu fahren.

Die DE 101 36 410 A1 offenbart ein Einparkhilfssystem, das auf einer Anzeigeeinheit bzw. einem Bildschirm die Zielparkposition, die gegenwärtige Fahrzeugposition und die erwartete Parkposition anzeigt.

Vollautomatische Verfahren bergen die Gefahr, dass der Fahrer sich aus der Verantwortung genommen fühlt. Bei einem Systemversagen kann dies zu einem Unfall führen.

Aufgabe der Erfindung ist es, eine Einparkhilfe zu schaffen, die den Fahrer unterstützt und die gleichzeitig sicherstellt, dass der Fahrer das Fahrzeug kontrolliert und somit die Verantwortung für den Einparkvorgang behält.

Die Aufgabe wird durch die Merkmale des unabhängigen Patentanspruchs 1 gelöst. Dabei ist vorgesehen, dass in Abhängigkeit von einer vom Fahrer aufgebrachten Lenkleistung oder einer davon abhängigen Größe eine Begrenzung des auf das Lenkrad aufgebrachten Lenkmoments (Lenkunterstützungsmoments) erfolgt.

Bevorzugte Ausgestaltungen und Weiterbildungen des Erfindungsgegenstandes sind in den Unteransprüchen angegeben.

Die Aufgabe wird durch eine Einparkhilfe für ein Fahrzeug mit einer Fahrzeuglenkung mit einem Lenkhandrad (Lenkrad) und einem Lenkmomenten-Regelungsmodul, mittels welchem dem Lenkrad ein Lenkmoment aufprägbar ist, gelöst, die dadurch gekennzeichnet ist, dass die Einparkhilfe mit dem Lenkmomenten-Regelungsmodul zusammenwirkt und ein zusätzliches Lenkmoment auf das Lenkrad aufgebracht wird, mittels dem der Fahrer des Fahrzeugs bei einem Einparkvorgang unterstützt wird.

Die Einparkhilfe gibt dem Fahrer im Sinne der Erfindung Handlungsanweisungen zum Lenken durch ein zusätzliches Lenkmoment. Durch diese haptische Rückmeldung wird der Fahrer auf eine für ihn komfortable Weise beim Einparken unterstützt.

Wenn der Fahrer den Handlungsanweisungen zum Lenken folgt, d.h. die entsprechenden Lenkhinweise durch das zusätzliche Lenkmoment richtig umsetzt, bleibt sichergestellt, dass er mit dem Lenkvorgang bewusst übereinstimmt.

Daraus ergibt sich als ein Vorteil der Erfindung, dass das Fahrzeug im Grundsatz nicht entgegen den Fahrerwillen gelenkt werden kann. Der Fahrer fühlt sich auch weiter in der Verantwortung und wird daher das Fahrzeug entsprechend seinem Wunsch führen.

Nach der Erfindung ist es vorgesehen, dass das zusätzlich auf das Lenkrad aufgebrachte Lenkmoment mindestens einen künstlichen Lenkanschlag, vorzugsweise ein oder zwei Lenkanschläge, generiert.

Der Begriff "künstlicher Lenkanschlag" bedeutet hier, dass ab einer bestimmten Stellung des Lenkrads ein stark ansteigendes Lenkmoment aufgebracht wird, so dass der Fahrer einen relativ starken Widerstand, ein "Gegenmoment" spürt, wenn er in das Lenkrad weiter in diese Richtung dreht.

So wird ihm angezeigt, dass er das Lenkrad nicht weiter in diese Richtung drehen soll.

Erfindungsgemäß ist es vorgesehen, dass der Fahrer durch das zusätzlich auf das Lenkrad aufgebrachte Lenkmoment bei seiner Lenktätigkeit bei dem Einparkvorgang geführt wird. Dass bedeutet, dem Fahrer wird durch eine kontinuierliche Veränderung des zusätzlich aufgebrachten Lenkmoments während des Einparkvorgangs kontinuierlich angezeigt, ab welchem Punkt, d.h. ab welcher bestimmten Lenkradstellung, er das Lenkrad nicht weiter in eine bestimmte Richtung drehen sollte, wenn der Fahrer nicht "richtig" lenkt. Folgt der Fahrer den Handlungsanweisungen zum Lenken, dann spürt er keinen erhöhten Widerstand bei seiner Lenktätigkeit. Er kann so sein Fahrzeug sicher und bewusst selbst einparken.

Betätigt der Fahrer das Lenkrad selbständig in der Weise, dass der Einparkvorgang optimal erfolgt, d. h. lenkt er von selbst "richtig", so ändert sich das aufgebrachte Moment nicht.

Die Erfindung wird anhand von drei Abbildungen (Fig. 1 bis Fig. 3) im Folgenden beispielhaft näher erläutert.

Die Fig. 1 zeigt ein Flussdiagramm der einzelnen Module für die Einparkhilfe und deren Zusammenwirken.

In der Fig. 2 ist das Aufbringen des zusätzlichen Lenkmoments schematisch dargestellt.

In der Fig. 3 ist eine Begrenzung des auf das Lenkrad aufgebrachten Lenkmoments (Lenkunterstützungsmoments) schematisch dargestellt.

Die in Fig. 1 dargestellte Einparkhilfe weist ein Fahrererkennungsmodul (1) auf, das in Abhängigkeit eines gemessenen, vom Fahrer aufgebrachten Lenkmomentes (2) ein Längsdynamiksteuermodul (3) ansteuert (4).

Die Einparkhilfe weist auch ein Modul (5) zur Bestimmung der Fahrzeugposition auf. Die Fahrzeugposition wird nach Maßgabe eines ermittelten Lenkwinkels (6), von Parklückenkoordinaten (7) und von ermittelten Raddrehzahlen (8) bestimmt. Die Fahrzeugposition relativ zu der Parklücke wird einem Lenkwinkelsteuerungsmodul (9) zur Verfügung gestellt (10).

Das Lenkwinkelsteuerungsmodul (9) erzeugt einen Soll-Lenkwinkel als Ausgangssignal (11) und übergibt diesen gewünschten Lenkwinkel ein Lenkmomenten-Regelungsmodul (12), das in Abhängigkeit dieses gewünschten (11) und des gemessenen Lenkwinkels (6) ein zusätzliches Lenkmoment, ein Lenkunterstützungsmoment (13), regelt.

Die Fahrzeugposition relativ zur Parklücke (10) wird auch dem Längsdynamiksteuermodul (3) zugeführt (14). Das Längsdynamiksteuermodul (3) steuert die Längsdynamik mittels eines Bremseingriffs (15) und/oder eines Motormomenteneingriffs (16). Als weitere Eingangsgrößen wird dem Längsdynamiksteuermodul (3) eine Beschleunigungsanforderung bzw. eine Verzögerungsanforderung zugeführt (17), welche z.B. auf Grundlage des Gaspedalwegs und des Bremspedalwegs ermittelt werden.

Für die Erfindung ist es wesentlich, dass dem Fahrer während des Einparkvorgangs durch eine geeignete Momentenaufschaltung im Lenkmomenten-Regelungsmodul (12) ein künstlicher Lenkanschlag generiert wird. Dieser hilft ihm, den im Lenkwinkelsteuerungsmodul (9) berechneten richtigen Lenkwinkel vorzugeben. Abhängig von dem vom Fahrer aufgebrachten Moment wird in dem Fahrererkennungsmodul (1) überprüft, ob der Fahrer den Parkvorgang kontrolliert.

Parallel dazu wird der Fahrer durch das Längsdynamiksteuermodul (3) bei der Kontrolle der Fahrzeuggeschwindigkeit unterstützt. Es werden hier durch automatische Bremseingriffe (15) in Abhängigkeit von der Fahrererkennung (4) und der im Positionsbestimmungsmodul (5) errechneten Fahrzeugposition relativ zu den Parklückenkoordinaten (14) Kollisionen mit den an die Parklücke angrenzenden Fahrzeugen verhindert.

Dazu ist nach der Erfindung eine Lenkung vorhanden, auf die extern ein zusätzliches Lenkmoment (Zusatzlenkmoment) überlagert, das bedeutet addiert bzw. subtrahiert, werden kann. Vorteilhaft weist das Fahrzeug ein elektronisches Bremssystem auf, welches externe Bremsdruckvorgaben einstellen kann, sowie ein Motormanagement, dass Eingriffe in das Motormoment von außen erlaubt.

Fig. 2 zeigt das Aufbringen des zusätzlichen Lenkmoments durch bei der Lenkmomentenregelung durch das Lenkmomenten-Regelungsmodul (12), wobei das Lenkmoment M gegen den Lenkwinkel $\Phi$ (19) aufgetragen ist.

Bei der Lenkmomentenregelung wird in Abhängigkeit des gemessenen Lenkwinkels (6) $\Phi_{ist}$ ein virtueller Lenkanschlag (20) generiert, der während des Einparkvorgangs abhängig von dem Soll-Lenkwinkel $\Phi_{Soll}$ so verschoben wird, dass sich das Fahrzeug auf einer Trajektorie (Bahnverlauf der Fahrzeugbewegung) in eine Parklücke bewegt, falls der Fahrer die Lenkung kontinuierlich gegen den Lenkanschlag hält und ihm folgt.

Es ist vorgesehen, den Fahrer beim Einparken auf verschiedene alternative Strategien zu unterstützen:

Entweder wird der Fahrer bei einer ersten Strategie vom Lenkmoment "eingefangen" und automatisch in die Parklücke geleitet. Dazu wird der künstliche Lenkanschlag beim Rechtsparken linksseitig und beim Linksparken rechtsseitig aufgebracht.

Bei einer zweiten, alternativen Strategie wird der Fahrer angehalten, entgegen dem Lenkwiderstand das Fahrzeug in die Parklücke einzuparken. Dann wird der künstliche Lenkanschlag beim Rechtsparken rechtsseitig und beim Linksparken linksseitig aufgebracht werden.

Ebenfalls vorgesehen ist eine weitere Strategie, bei der ein beidseitiger Lenkanschlag erfolgt. Diese Kombination erleichtert dem Fahrer das Gegenlenken während des Parkvorgangs.

Die Steuerung des Lenkanschlags erfolgt durch das Lenkwinkelsteuerungsmodul (9). Es berechnet in Abhängigkeit von der Parklückeninformation und der Fahrzeug-Position (10) eine Trajektorie zum Einfahren in die Parklücke. In Abhängigkeit von dieser berechneten Trajektorie und der sich ändernden Fahrzeug-Position (10) berechnet es außerdem einen Lenkwinkel (11).

Die Fahrzeug-Position wird dazu im Positionsbestimmungsmodul (5) während des Einparkvorgangs kontinuierlich, relativ zu den gemessenen Parklückenkoordinaten (7) berechnet. Eingangsgrößen hierbei sind Lenkwinkel (6), Raddrehzahlen (8) und optional Informationen der Abstandssensorik (7).

Um zu kontrollieren, ob der Fahrer das Lenkrad am künstlichen Lenkanschlag hält, wird das vom Fahrer aufgebrachte Lenkmoment (2) bestimmt. Das Lenkmoment kann dazu sowohl gemessen als auch berechnet werden.

Ein Fahrererkennungsmodul (1) überprüft, ob das vom Fahrer gegen den künstlichen Lenkanschlag aufgebrachte Lenkmoment einen definierten Schwellwert, vorzugsweise ca. 0,5 bis 3 Nm, insbesondere ca. 1 Nm, erreicht. Solange das vom Fahrer aufgebrachte Lenkmoment diesen Schwellwert überschreitet, kann der Einparkvorgang fortgesetzt werden. Sobald das Lenkmoment des Fahrers zu schwach wird, wird der Einparkvorgang durch Bremseingriff (15) gestoppt oder abgebrochen. Außerdem kann der Fahrer durch ein weiteres Lenksignal, wie ein gegenseitig ansteigendes Moment oder eine Vibration im Lenkrad, darauf aufmerksam gemacht werden, weiter gegen den Lenkanschlag zu lenken.

Das beschriebene Verfahren wird gemäß einer weiteren Ausführung der Erfindung auch grundsätzlich mit einer geeigneten Fahrerhandmomenterkennung eingesetzt. Denn das zuvor beschriebene Aufbringen eines Momentes gegen einen der beiden Lenkanschläge stellt nur eine (einfache) Variante dar. Es wird weiter vorgesehen, dass beispielsweise die Differenz aus einem Modell, welches das Moment eines Handmomentensensor berechnet, von einem tatsächlich gemessenen Handmoment subtrahiert wird. Als Ergebnis wird ein Fahrerhandmoment ermittelt, welche die Fahrerdetektion ermöglicht.

Die Geschwindigkeit des Fahrzeugs wird durch das Längsdynamiksteuermodul (3) beeinflusst. Der Fahrer bestimmt weiterhin über ein Pedal (Gaspedal oder Bremspedal) die maximale Geschwindigkeit. Dabei werden Bremse und Motormoment so aufeinander abgestimmt, dass die durch das Pedal vorgegebene Geschwindigkeit eingeregelt wird.

Es ist vorgesehen, dass der Fahrer durch die Stellung des Gaspedals die Fahrzeuggeschwindigkeit kontrolliert. Die Regelung bei einer Kontrolle durch Gaspedalstellung, als "Gaspedalsteuerung" bezeichnet, wird im folgenden beschrieben.

Ohne getretenes Gaspedal ist die gewünschte Fahrzeuggeschwindigkeit 0 Km/h, bei stark oder voll getretenem Gaspedal entspricht die gewünschte Fahrzeuggeschwindigkeit der maximalen Einparkgeschwindigkeit. Das Motormoment wird stärker, wenn die der Gaspedalstellung entsprechende gewünschte Geschwindigkeit größer als die gemessene Geschwindigkeit ist. Das Motormoment wird schwächer, wenn die gewünschte Geschwindigkeit unterhalb der gemessenen Geschwindigkeit liegt. Wird dieser Unterschied größer oder liegt die gewünschte Geschwindigkeit nahe 0 bzw. bei 0 Km/h, wird zusätzlich die Bremse aktiviert (15).

Es ist ebenso vorgesehen, dass der Fahrer die Stellung des Bremspedals zur Steuerung der Fahrzeuggeschwindigkeit einsetzt. Bei der Regelung durch Bremspedalstellung, der als "Bremspedalsteuerung" bezeichneten Strategie, entspricht die gewünschte Fahrzeuggeschwindigkeit ohne getretenes Bremspedal der aus gegebener Gangstellung und Leerlaufdrehzahl resultierenden Geschwindigkeit. Bei stark oder voll getretenem Bremspedal ist die gewünschte Fahrzeuggeschwindigkeit 0 Km/h.

Die Bremskraft wird stärker, wenn das Bremspedal stärker getreten wird und das Motormoment wird entsprechend der Differenz zwischen gemessener Geschwindigkeit und Sollgeschwindigkeit zurückgenommen. Damit im Bremspedal ausreichend Weg zur Kontrolle der Geschwindigkeit ohne oder bei geringer Bremskraft ist, ist es für bestimmte Anwendungen erforderlich, einen Bremspedalweg für die bestimmte Bremskraft neu zu ermitteln.

Es ist vorgesehen, dass das Fahrzeug auch in Abhängigkeit von der Position zu den erkannten Hindernissen eingebremst wird. Dies schließt das Stoppen am Ende der Parklücke sowie das Bremsen bei Verlassen der geplanten Trajektorie (Bahnverlauf) ein.

Optional kann das Fahrzeug in Abhängigkeit von der Fahrererkennung eingebremst werden. Das Fahrzeug kann ebenfalls eingebremst werden, sobald das Fahrermoment einen Schwellwert, vorzugsweise 3 bis 10 Nm, insbesondere ca. 6 Nm, überschritten hat. In diesem Fall wird das Fahrzeug gestoppt, bis das korrekte Lenkmoment wieder gegeben ist. Das unbeabsichtigte Verlassen der vorgegebenen Trajektorie wird so erschwert oder verhindert.

Die Funktion der Einparkhilfe wird beim Erreichen der korrekten Parkposition beendet. Daneben gibt es weitere Abbruchkriterien.

Falls der Fahrer wegen mangelndem Druck gegen den künstlichen Lenkanschlag automatisch eingebremst wurde und er über einen definierten Zeitraum dennoch ohne Lenkwinkeländerung eine Beschleunigungsanforderung durch Treten des Gaspedals vorgibt, wird die Funktion der Einparkhilfe abgebrochen.

Der Einparkvorgang wird auch abgebrochen, wenn das maximale Moment des künstlichen Lenkanschlags überschritten worden ist und der Wagen zum Stillstand gekommen ist.

Parallel zur haptischen Rückmeldung am Lenkrad und den automatischen Bremseingriffen können dem Fahrer über bestehende oder zusätzliche Meldeeinrichtungen Handlungsanweisungen gegeben werden.

Dem Fahrer wird durch diese Maßnahmen geholfen, das Fahrzeug einzuparken. Er behält gleichzeitig die Verantwortung, den Einparkvorgang zu überwachen und ihn falls notwendig, abzubrechen.

Besonderer Vorteil dieses Einparkhilfe ist es, dass es bei Kompaktwagen mit elektrischer Servolenkung und vorzugsweise mit einem elektronischen Bremssystem mit autonomer Brems-Eingriffsmöglichkeit, wie Fahrdynamikregelung (ESP) oder Antriebsschlupfregelung (TCS), mit Fahrzeugkomponenten arbeitet, die bereits zur Erfüllung anderer Funktionen im Fahrzeug verbaut sind.

Bei Fahrzeugen mit hydraulischer Servolenkung kann das Verfahren ebenfalls angewendet werden, wenn die Servolenkung durch eine zusätzliche Einrichtung, wie z.B. einen Elektromotor in der Lenksäule, für externe Lenkmomentenanforderung erweitert wird. Das Verfahren kann in Teilen realisiert oder mit bekannten Verfahren kombiniert werden. Dazu zählen insbesondere die heute verwendeten optischen oder akustischen Hinweise.

Die Begrenzung des auf das Lenkrad aufgebrachten Lenkmoments (Lenkunterstützungsmoments) nach der weiteren Ausführungsform der Erfindung ist in der Fig. 3 in einem Flussdiagramm genauer dargestellt.

Bei dieser besonderen Ausführungsform erfolgt eine Begrenzung des auf das Lenkrad aufgebrachten Lenkmoments (Lenkunterstützungsmoments) in Abhängigkeit von der vom Fahrer aufgebrachten Lenkleistung.

Im Grundsatz kann die Begrenzung des Lenkunterstützungsmomentes zur Lenkwinkelreglung für ein geführtes Fahren bzw. Folgen (Fahrerassistenz, bei der der Fahrer selbstständig lenkt und vorzugsweise durch Lenkanschlag geführt wird) oder aber ein automatisches Folgen einer Einparktrajektorie (Einparkbahn durch Ermittlung, Überwachung und Einregelung einer Sollposition und eines Sollgierwinkels) verwendet werden.

Für den Einparkvorgang ist hier vorgesehen, dass in Abhängigkeit von der Regeldifferenz zwischen Soll- und Istposition des Hinterachsmittelpunktes sowie aus der Regeldifferenz zwischen Soll- und Istgierwinkel des Fahrzeugs ein Lenkwinkelregler einen gewünschten Lenkwinkel berechnet.

Um den gewünschten Lenkwinkel einzuregeln, wird dieser anschließend mit dem Istlenkwinkel $\delta_{ist}$ verglichen, um in Abhängigkeit der sich ergebenden Regeldifferenz $\Delta\delta$ ein gewünschtes Lenkunterstützungsmoment von der Lenkung anzufordern.

Der Fahrer soll die erstellten künstlichen Lenkanschläge deutlich spüren, das aufgeschaltete Moment darf aber andererseits nicht unangenehm werden. Während bei einem stillstehendem oder einem sich langsam drehenden Lenkrad 8 Nm für einen Fahrer einen angenehmen Lenkanschlag darstellen, wirkt dieses Moment bei höherer Drehzahl des Lenkrades aufgrund einer stärkeren Lenkwinkeländerung unangenehm. Bei höheren Drehzahlen ist auch ein niedrigeres Moment leicht spürbar.

Aus diesem Grunde beschränkt der Regler das geforderte Moment in Abhängigkeit der vom Fahrer aufgebrachten Lenkleistung $W_{ist}$ 21.

Zur Ermittlung der Lenkleistung $W_{ist}$ 21 wird der absolute Wert der im letzten Zeitschritt gemessene Änderung des Lenkwinkels $\frac{d\delta_{ist}}{dt}$ 22 mit einem im gleichen Zeitschritt durch einen Handmomentensensor gemessenen Fahrermoment $M_F$ 23 in der Leistungsermittlungs-Einheit 29 multipliziert.

Die so errechnete Leistung $W_{ist}$ 21 wird von einer definierten maximalen Lenkleistung $W_{max}$ 24 in einer Begrenzungseinheit 30 subtrahiert.

Ist das Ergebnis positiv, so kann diese zu hohe Leistung $W_x$ 25 wieder durch die Lenkwinkeländerung dividiert werden in einer Überschussmoment-Ermittlungseinheit 31.

Das damit errechnete überschüssige Moment $M_{ueb}$ 26 kann in einer Verstärkungseinheit 32 mit einem Faktor versehen werden. Es wird dann in einer Subtraktionseinheit 33 von einem Wunschlenkmoment $M_{gew}$ 27 subtrahiert.

So ergibt sich das resultierende, begrenzte Lenkunterstützungsmoment $M_{erl}$ 28, das von der Lenkung angefordert wird.

Demnach weist das Verfahren zur Begrenzung des Unterstützungsmoments folgenden wesentliche Schritte auf:

- Bestimmung des Handmoments durch den Fahrer
- Bestimmung der Lenkraddrehgeschwindigkeit
- Verringerung des Unterstützungsmoments um so stärker, je größer die Lenkraddrehgeschwindigkeit ist

Das Verfahren kann in Teilen realisiert oder mit bekannten Verfahren kombiniert werden. Dazu zählen insbesondere neben den beschriebenen Verfahren auch die heute verwendeten optischen oder akustischen Hinweise.

## Patentansprüche

1. Einparkhilfe für ein Fahrzeug mit einer Fahrzeuglenkung mit einem Lenkhandrad (Lenkrad) und einem Lenkmomenten-Regelungsmodul, mittels welchem dem Lenkrad ein Lenkmoment aufprägbar ist, wobei die Einparkhilfe mit dem Lenkmomenten-Regelungsmodul zusammenwirkt und ein zusätzliches Lenkmoment auf das Lenkrad aufgebracht wird, mittels dem der Fahrer des Fahrzeugs bei einem Einparkvorgang unterstützt wird und zusätzlich auf das Lenkrad aufgebrachte Lenkmoment mindestens einen künstlichen Lenkanschlag generiert und der Fahrer durch das zusätzlich auf das Lenkrad aufgebrachte Lenkmoment bei seiner Lenktätigkeit bei dem Einparkvorgang geführt wird,
**dadurch gekennzeichnet, dass** in Abhängigkeit von einer vom Fahrer aufgebrachten Lenkleistung oder einer davon abhängigen Größe eine Begrenzung des auf das Lenkrad aufgebrachten Lenkmoments (Lenkunterstützungsmoments) erfolgt.

**2.** Einparkhilfe nach Anspruch 1
**dadurch gekennzeichnet,**
**dass** lenkwinkelabhängig aufgebrachte Änderungen von Rückstellmomenten der Lenkung ermittelt werden, und dass unter Berücksichtigung der Änderungen der Rückstellmomente ein zusätzliches Lenkmoment (Lenkunterstützungsmoment) auf das Lenkrad aufgebracht wird, mittels dem der Fahrer des Fahrzeugs bei einem Einparkvorgang unterstützt wird.

**3.** Einparkhilfe nach Anspruch 2,
**dadurch gekennzeichnet,**
**dass** das zusätzlich auf das Lenkrad aufgebrachte Lenkmoment mindestens einen künstlichen Lenkanschlag, vorzugsweise ein oder zwei Lenkanschläge, generiert und der Fahrer durch das zusätzlich auf das Lenkrad aufgebrachte Lenkmoment bei seiner Lenktätigkeit bei dem Einparkvorgang geführt wird.

**4.** Einparkhilfe nach Anspruch 2 oder 3,
**dadurch gekennzeichnet,**
**dass** das auf das Lenkrad aufgebrachte Lenkmoment (Lenkunterstützungsmoment) in Abhängigkeit von einer vom Fahrer aufgebrachten Lenkleistung oder einer davon abhängigen Größe variabel einstellbar ist.

**5.** Einparkhilfe nach einem der Anspruch 2 bis 4,
**dadurch gekennzeichnet,**
**dass** bei einer schnelleren Lenkradbetätigung oder einer davon abhängigen Größe, d.h. einer größeren Lenkraddrehgeschwindigkeit, das Lenkunterstützungsmoment reduziert wird.

**6.** Einparkhilfe nach Anspruch 1,
**dadurch gekennzeichnet,**
**dass** ein Fahrer des Fahrzeugs durch ein gemessenes Lenkmoment gegen mindestens einen künstlichen Lenkanschlag, vorzugsweise ein oder zwei Lenkanschläge, identifiziert wird, der mittels eines zusätzlich auf das Lenkrad aufgebrachten Lenkmoments generiert wird.

**7.** Einparkhilfe nach Anspruch 6,
**dadurch gekennzeichnet,**
**dass** der Fahrer durch einen gemessenen Lenkwinkel innerhalb eines ansteigenden Lenkmoments des künstlichen Lenkanschlags identifiziert wird.

**8.** Einparkhilfe nach Anspruch 6 oder 7,
**dadurch gekennzeichnet,**
**dass** eine für einen Lenkmomentenaktuator, insbesondere einen Elektromotor, benötigte Leistung ermittelt wird, und dass ein Fahrerlenkmoment auf Grundlage der benötigten Leistung des Lenkmomentenaktuators ermittelt wird.

**9.** Einparkhilfe nach Anspruch 1,
**dadurch gekennzeichnet,**
**dass** bei einem Einfahren in eine Parklücke die Geschwindigkeit des Fahrzeugs in Abhängigkeit von einer Stellung des Gaspedals durch automatische Bremseingriffe kontrolliert wird.

**10.** Einparkhilfe nach Anspruch 9,
**dadurch gekennzeichnet,**
**dass** bei dem Einfahren in die Parklücke die Geschwindigkeit des Fahrzeugs in Abhängigkeit von einer Stellung eines Bremspedals durch zusätzliche Eingriffe in ein Motormoment eines Antriebsmotors des Fahrzeugs kontrolliert wird.

**11.** Einparkhilfe nach Anspruch Ansprüche 9 oder 10,
**dadurch gekennzeichnet,**
**dass** bei dem Einfahren in die Parklücke die Geschwindigkeit in Abhängigkeit von einer Stellung eines Bremspedals durch zusätzliche Eingriffe in ein Motormoment eines Antriebsmotors des Fahrzeugs und einen automatischen Gangwechsel eines Fahrzeuggetriebes kontrolliert wird.

**12.** Einparkhilfe nach einem der Ansprüche 10 bis 11,
**dadurch gekennzeichnet,**
**dass** das Ende einer Parklücke ermittelt wird, und dass bei einem Erreichen oder kurz vor dem Erreichen des Endes der Parklücke das Fahrzeug automatisch abgebremst wird.

## Claims

**1.** Parking aid for a vehicle having a vehicle steering system with a steering handwheel (steering wheel) and a steering torque control module, by means of which a steering torque can be impressed on the steering wheel, wherein the parking aid interacts with the steering torque control module, and an additional steering torque is applied to the steering wheel, by means of which additional steering torque the driver of the vehicle is assisted during a parking process and additionally steering torque which is applied to the steering wheel generates at least one artificial steering stop, and the driver is guided, during his steering activity during the parking process, by the steering torque which is additionally applied to the steering wheel,
**characterized**

**in that** limitation of the steering torque (steering assistance torque) which is applied to the steering wheel is performed as a function of a steering power applied by the driver or a variable which is dependent thereon.

**2.** Parking aid according to Claim 1
**characterized**
**in that** changes in restoring torques of the steering system which will be applied as a function of the steering angle are determined, and in that an additional steering torque (steering assistance torque) is applied to the steering wheel taking into account the changes in the restoring torques, by means of which additional steering torque the driver of the vehicle is assisted during a parking process.

**3.** Parking aid according to Claim 2,
**characterized**
**in that** the steering torque which is additionally applied to the steering wheel at least generates an artificial steering stop, preferably one or two steering stops, and the driver is guided, during his steering activity during the parking process, by the steering torque which is additionally applied to the steering wheel.

**4.** Parking aid according to Claim 2 or 3,
**characterized**
**in that** the steering torque (steering assistance torque) which is applied to the steering wheel can be adjusted in a variable fashion as a function of a steering power which is applied by the driver or a variable which is dependent thereon.

**5.** Parking aid according to one of Claims 2 to 4,
**characterized**
**in that**, during a relatively rapid steering wheel activation or a variable which is dependent thereon, i.e. a relatively large steering wheel rotational speed, the steering assistance torque is reduced.

**6.** Parking aid according to Claim 1,
**characterized**
**in that** a driver of the vehicle is identified by means of a measured steering torque against at least one artificial steering stop, preferably one or two steering stops, which is/are generated by means of a steering torque which is additionally applied to the steering wheel.

**7.** Parking aid according to Claim 6,
**characterized**
**in that** the driver is identified by means of a measured steering angle within an increasing steering torque of the artificial steering stop.

**8.** Parking aid according to Claim 6 or 7,
**characterized**
**in that** a power which is required for a steering torque actuator, in particular an electric engine, is determined, and in that a driver steering torque is determined on the basis of the required power of the steering torque actuator.

**9.** Parking aid according to Claim 1,
**characterized**
**in that** when the vehicle is being driven into a parking space, the speed of the vehicle is monitored as a function of a position of the accelerator pedal by means of automatic braking interventions.

**10.** Parking aid according to Claim 9,
**characterized**
**in that** when the vehicle is being driven into a parking space, the speed of the vehicle is monitored as a function of a position of a brake pedal by means of additional interventions into an engine torque of a drive engine of the vehicle.

**11.** Parking aid according to Claims 9 and 10,
**characterized**
**in that** when the vehicle is being driven into the parking space, the speed is monitored as a function of a position of a brake pedal by means of additional interventions into an engine torque of a drive engine of the vehicle and an automatic gear speed change of a vehicle transmission.

**12.** Parking aid according to one of Claims 10 to 11,
**characterized**
**in that** the end of a parking space is determined, and in that when the end of parking space is reached, or just before the end of parking space is reached, the vehicle is braked automatically.

## Revendications

**1.** Aide au stationnement pour un véhicule comprenant une direction de véhicule avec un volant manuel de direction (volant) et un module de régulation du couple de braquage, au moyen duquel un couple de braquage peut être appliqué au volant, l'aide au stationnement coopérant avec le module de régulation du couple de braquage et un couple de braquage supplémentaire étant appliqué au volant pour assister le conducteur du véhicule lors d'une opération de stationnement et le couple de braquage appliqué de manière supplémentaire au volant produisant au moins une butée de braquage artificielle et le conducteur, lors de son action de braquage pendant l'opération de stationnement, étant guidé par le couple de braquage appliqué de manière supplémentaire au volant,
**caractérisée en ce**

**qu'**en fonction d'une puissance de braquage appliquée par le conducteur ou d'une valeur en dépendant, une limitation du couple de braquage appliqué au volant (couple d'assistance à la direction) a lieu.

**2.** Aide au stationnement selon la revendication 1, **caractérisée en ce que** des variations de couples de redressement de la direction, appliquées en fonction de l'angle de braquage, sont déterminées et **en ce qu'**en tenant compte des variations des couples de redressement, un couple de braquage supplémentaire (couple d'assistance à la direction) est appliqué au volant pour assister le conducteur du véhicule lors d'une opération de stationnement.

**3.** Aide au stationnement selon la revendication 2, **caractérisée en ce que** le couple de braquage appliqué de manière supplémentaire au volant produit au moins une butée de braquage artificielle, de préférence une ou deux butées de braquage, et le conducteur, lors de son action de braquage pendant l'opération de stationnement, est guidé par le couple de braquage appliqué de manière supplémentaire au volant.

**4.** Aide au stationnement selon la revendication 2 ou 3, **caractérisée en ce que** le couple de braquage appliqué au volant (couple d'assistance à la direction) peut être ajusté de manière réglable en fonction d'une puissance de braquage appliquée par le conducteur ou d'une valeur en dépendant.

**5.** Aide au stationnement selon l'une quelconque des revendications 2 à 4, **caractérisée en ce que** dans le cas d'un actionnement du volant plus rapide, ou d'une valeur en dépendant, c'est-à-dire d'une vitesse de rotation du volant plus importante, le couple d'assistance à la direction est réduit.

**6.** Aide au stationnement selon la revendication 1, **caractérisée en ce qu'**un conducteur du véhicule est identifié par un couple de braquage mesuré contre au moins une butée de braquage artificielle, de préférence une ou deux butées de braquage, qui sont produites au moyen d'un couple de braquage appliqué de manière supplémentaire au volant.

**7.** Aide au stationnement selon la revendication 6, **caractérisée en ce que** le conducteur est identifié par un angle de braquage mesuré dans un couple de braquage croissant de la butée de braquage artificielle.

**8.** Aide au stationnement selon la revendication 6 ou 7, **caractérisée en ce qu'**une puissance requise pour un actionneur de couple de braquage, en particulier un moteur électrique, est déterminée et en ce qu'un couple de braquage du conducteur est déterminé sur la base de la puissance requise de l'actionneur de couple de braquage.

**9.** Aide au stationnement selon la revendication 1, **caractérisée en ce que** lors de l'amorce d'un créneau, la vitesse du véhicule est contrôlée en fonction d'une position de la pédale d'accélération par des interventions automatiques des freins.

**10.** Aide au stationnement selon la revendication 9, **caractérisée en ce que** lors de l'amorce d'un créneau, la vitesse du véhicule est contrôlée en fonction d'une position d'une pédale de frein par des interventions supplémentaires dans un couple moteur d'un moteur d'entraînement du véhicule.

**11.** Aide au stationnement selon les revendications 9 ou 10, **caractérisée en ce que** lors de l'amorce d'un créneau, la vitesse est contrôlée en fonction d'une position d'une pédale de frein par des interventions supplémentaires dans un couple moteur d'un moteur d'entraînement du véhicule et par un changement de vitesse automatique d'une boîte de vitesses du véhicule.

**12.** Aide au stationnement selon l'une quelconque des revendications 10 et 11, **caractérisée en ce que** la fin d'un créneau est déterminée et **en ce que** dans le cas où le véhicule arrive à la fin du créneau ou juste avant qu'il n'y arrive, il est freiné automatiquement.

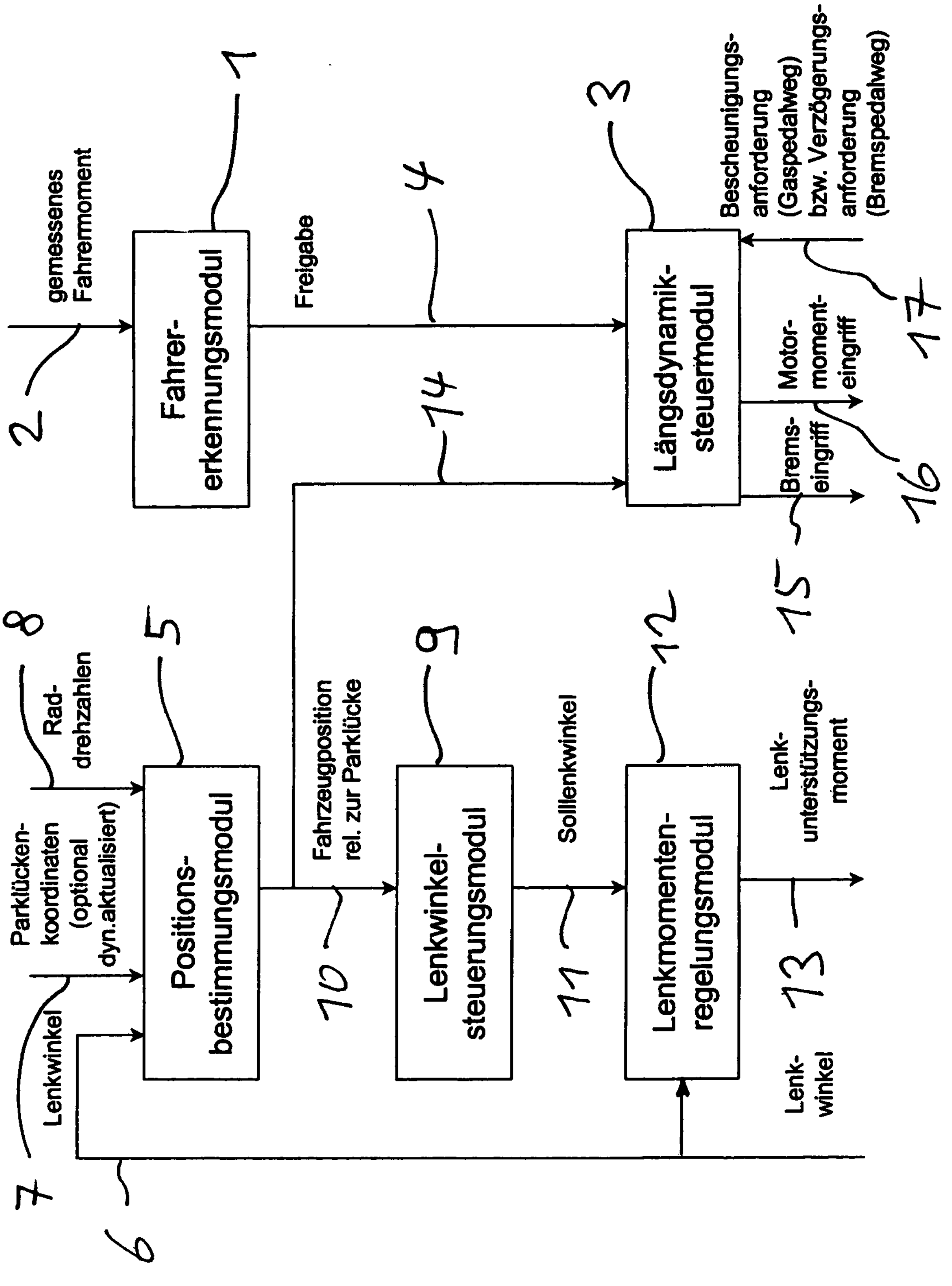
gemessenes Fahrermoment
Fahrer-erkennungsmodul
Freigabe
Längsdynamik-steuermodul
Bescheunigungs-anforderung (Gaspedalweg) bzw. Verzögerungs-anforderung (Bremspedalweg)
Brems-eingriff
Motor-moment-eingriff
Lenkwinkel
Parklücken-koordinaten (optional dyn.aktualisiert)
Rad-drehzahlen
Positions-bestimmungsmodul
Fahrzeugposition rel. zur Parklücke
Lenkwinkel-steuerungsmodul
Sollenkwinkel
Lenkmomenten-regelungsmodul
Lenk-unterstützungs-moment
Lenk-winkel
1
2
3
4
5
6
7
8
9
10
11
12
13
14
15
16
17

Fig. 1

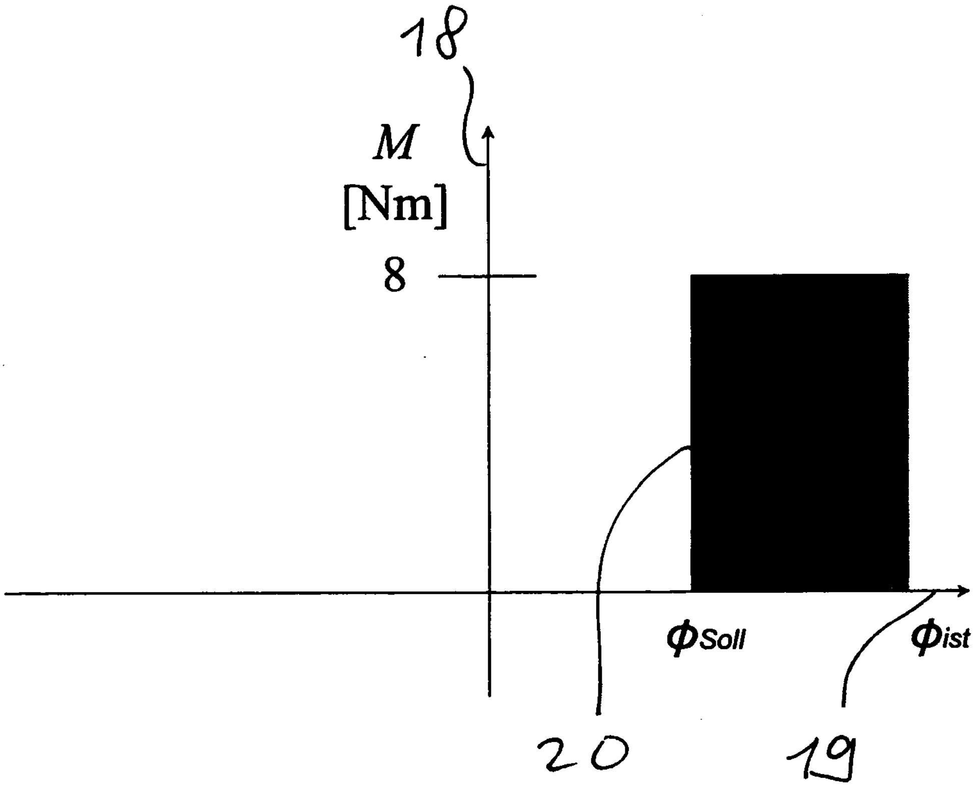


Fig. 2

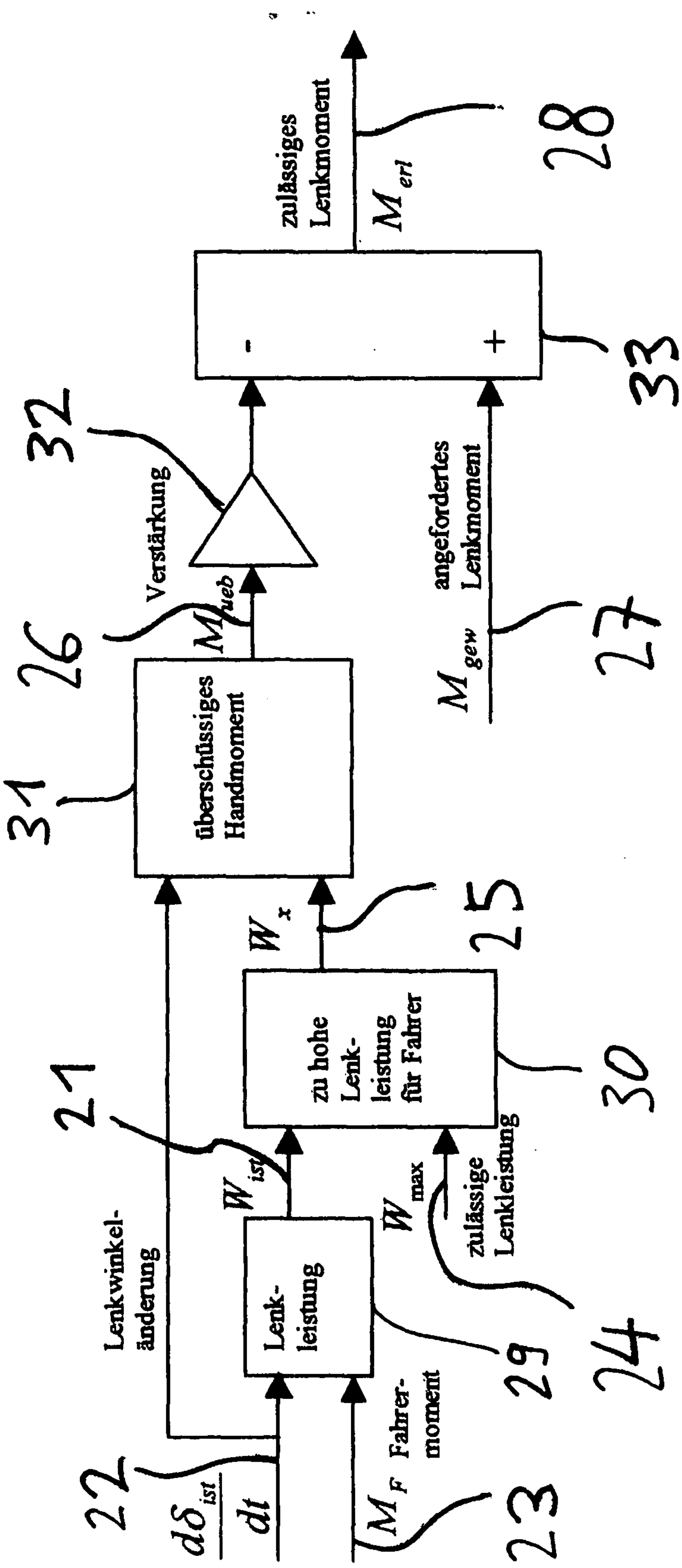

zulässiges Lenkmoment
$M_{erl}$
28
-
+
33
32
Verstärkung
$M_{ueb}$
26
angefordertes Lenkmoment
$M_{gew}$
27
31
überschüssiges Handmoment
$W_x$
25
zu hohe Lenkleistung für Fahrer
30
21
$W_{ist}$
Lenkwinkeländerung
$W_{max}$
zulässige Lenkleistung
24
Lenkleistung
29
22
$\frac{d\delta_{ist}}{dt}$
$M_F$
Fahrermoment
23


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5742141 A
- US 4735274 A
- DE 19645646 C1
- DE 10017279 A1
- US 4931930 A
- DE 10136410 A1